# EUROPÄISCHE PATENTSCHRIFT

(11) **EP 1 145 892 B1**
(45) Veröffentlichungstag und Bekanntmachung des Hinweises auf die Patenterteilung: **28.06.2006**
(21) Anmeldenummer: 01108995.0
(22) Anmeldetag: 11.04.2001
(51) Int. Cl.: B60K 15/07, B60R 9/055, B62D 47/02, F17C 13/08, B60R 9/048

(54) **Fahrzeug, insbesondere Gas- oder Trolleybus, mit einer Vorrichtung zur Lagerung von Fahrzeugteilen auf seinem Dach**
Vehicle, especially gas or trolleybus with a device for storing vehicle parts on the roof
Véhicule, notamment omnibus à gaz ou trolleybus avec un dispositif pour emmagasiner des éléments de véhicules sur le toit

(30) Priorität: 13.04.2000 AT 6382000
(43) Veröffentlichungstag der Anmeldung: 17.10.2001
(73) Patentinhaber: MAN Nutzfahrzeuge Aktiengesellschaft, 80995 München (DE)
(72) Erfinder: Michalski, Marek, Dipl.-Ing., 1230 Wien (AT); Penias, Erwin, 1230 Wien (AT); Vana, Christian, Dipl.-Ing., 1230 Wien (AT)

(56) Entgegenhaltungen:
- DE-A- 3 743 804
- DE-C- 800 276
- US-A- 4 837 914
- BRUNER G: "MODERNE STADTBUSSE MIT GASANTRIEB ES MUSS NICHT IMMER DIESEL SEIN" INTERNATIONALES VERKEHRSWESEN, TETZLAFF VERLAG, DARMSTADT, DE, Bd. 46, Nr. 6, 1. Juni 1994 (1994-06-01), Seiten 355-360, XP000485604 ISSN: 0020-9511
- PATENT ABSTRACTS OF JAPAN Bd. 1999, Nr. 14, 22. Dezember 1999 (1999-12-22) -& JP 11 245673 A (MITSUBISHI MOTORS CORP), 14. September 1999 (1999-09-14)
- NEW FLYER NATURAL GAS BUSES (NEW FLYER) KANADA 1996 (1996)

## Beschreibung

Die Erfindung betrifft einen Gas- oder Trolleybus mit gattungsgemäßen Merkmalen wie im Oberbegriff des Anspruchs 1 angegeben.

Die Erfindung geht aus von gebauten Gasomnibussen, wie z. B. aus folgender Veröffentlichung "Bruner: Moderne Stadtbusse mit Gasantrieb", Internationales Verkehrswesen, Bd. 46 (1994)6, Tetzlafff Verlag, Darmstadt, Seiten 355-366, bekannt. Bei diesen dort offenbarten, mit Erdgas (CNG) betriebenen Omnibussen der Anmelderin wurden die Gasbehälter nebeneinander liegend auf einem im Wesentlichen ebenen Traggestell montiert, das nur diese Tragfunktion hatte. Dieses Traggestell wird zusammen mit den montierten Gasbehältern auf das Dach des Gasomnibusses gehoben und dort an vorgesehenen Stellen befestigt. Anschließend wird über dieser Anordnung von oben her eine Dachhaube platziert und ebenfalls am Busdach befestigt.

Des Weiteren ist aus der DE 3743804 A1, die der nächstliegenden Stand der Technik darstellt, ein gasbetriebener Omnibus bekannt, auf dessen Dach sich eine Senke befindet, in der ein Trägerrahmen mit darin befestigten Gasdruckbehältern eingebaut ist. Da der Trägerrahmen mit den Gasbehältern weitgehend in der Senke verschwindet, ist keine Abdeckung vorgesehen. Dies bringt Probleme bei Niederschlägen, z. B. betreffend die Abführung von Regenwasser aus der Senke. Außerdem sind die Gasdruckflaschen ungeschützt der Sonneneinstrahlung ausgesetzt. Ferner verteuert die Senke die Herstellkosten des Omnibusses. Die Senke reduziert in ihrem Bereich außerdem die Steh- und Gehhöhe im Innenraum des Busses.

Bei des Weiteren gebauten LPG-Bussen waren die notwendige Gasauffangwanne und eine Abdeckhaube ebenfalls als eigenständige Gebilde mit in sich im Hinblick auf Festigkeit, Tragfähigkeit und Formbeständigkeit strukturierten Wänden ausgebildet, welche Teile ebenfalls auf einem ebenen Traggestell montiert wurden. Diese Bauart ist vergleichsweise teuer, auch deren hohes Gewicht verursachte gewisse Probleme. Ähnliche Probleme traten auch bei herkömmlich gebauten Trolleybussen bei der dachseitigen Anbringung von entsprechenden Steuer-, Regel- oder sonstigen Geräten auf. Ein in sich wandseitig strukturierter kistenartiger Behälter, der diese Geräte aufnahm, erforderte aus ästhetischen Gründen eine zusätzliche, ebenfalls in sich wandseitig strukturierte Abdeckung, die auf entsprechenden Lagerelementen zu montieren war.

Es ist demgegenüber daher Aufgabe der Erfindung, bei einem Gas- oder Trolleybus eine Vorrichtung zur Lagerung von Fahrzeugteilen auf dem Dach zu schaffen, die einfach und kostengünstig herstellbar sowie montierbar ist und gegenüber vergleichbaren Vorrichtungen eine nennenswerte Gewichtsersparnis erbringt und aus einer für beide Bustypen einheitlichen Tragstruktur besteht.

Diese Aufgabe ist erfindungsgemäß bei einem Gas- oder Trolleybus durch einen in Anspruch 1 näher definierten Dachaufsatz gelöst.

Vorteilhafte Ausgestaltungen und Weiterbildungen der Erfindung sind in den Unteransprüchen angegeben. Da deren Merkmale ihre Stütze in der Figurenbeschreibung haben, ist an dieser Stelle auf deren wörtliche Zitierung verzichtet.

Die Vorteile der erfindungsgemäßen Lösung liegen eindeutig auf der Hand. Der Dachaufsatz ist aus günstig und einfach zusammenzubauenden Teilen herstellbar und auch an einem gut zugänglichen Arbeitsplatz mit den in ihn je Omnibus-Typ einzubauenden Fahrzeugteilen wie Gasbehältern mit Anschlüssen und Leitungen und/oder Steuer-, Regel oder sonstigen Geräten auszustatten. Die Gewichtseinsparung ergibt sich dadurch, dass bei der erfindungsgemäßen Lösung nur noch die Tragstruktur im Hinblick auf entsprechende Tragfähigkeit, Festigkeit und Formstabilität strukturiert sein muss, die Dachhaube und eine evtl. notwendige Einbauwanne dagegen nicht, sondern aus vergleichsweise leichtem Material bestehen können. Die Tragstruktur sorgt aufgrund ihrer Konstruktion für eine entsprechende strukturelle Abstützung dieser Teile.

Da an dem erfindungsgemäßen Dachaufsatz auch schon alle Anschlusselemente für den späteren Anbau am Omnibusdach, außerdem auch am Dach bzw. Dachgerippe des Omnibusses die diesbezüglichen Gegenelemente schon vorbereitet sind, ist eine vergleichsweise schnelle und einfache Montage des Dachaufsatzes auf dem Omnibus durchführbar. Der erfindungsgemäße Dachaufsatz lässt sich als Standardbauteil für die verschiedensten Arten und Größen von Omnibussen verwenden und begünstigt auch eine Vorratshaltung als Ersatzteil.

Nachstehend ist die erfindungsgemäße Lösung anhand eines in der Zeichnung dargestellten Ausführungsbeispiels noch näher erläutert. In der Zeichnung zeigen:

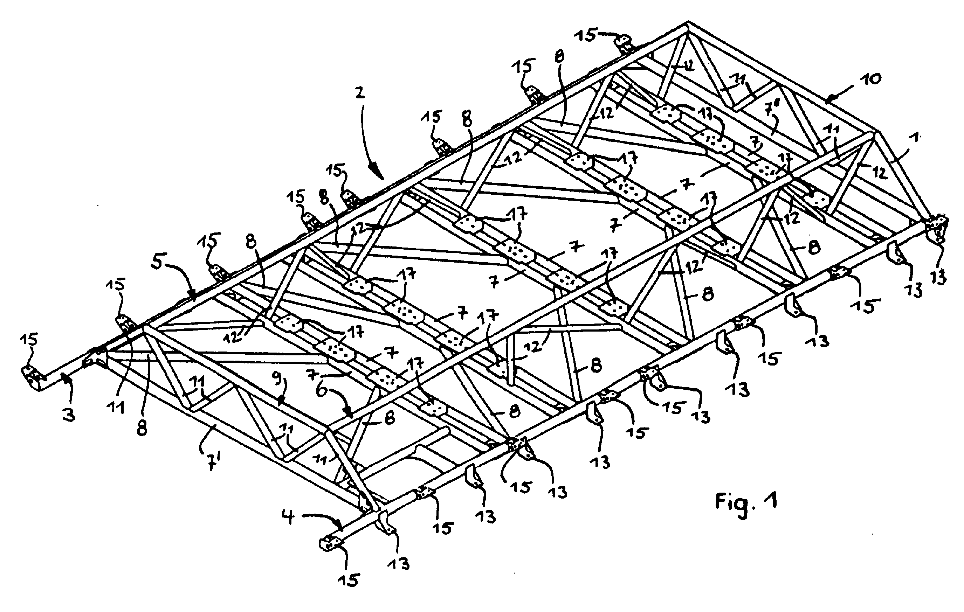

- Fig. 1: ein Ausführungsbeispiel einer Tragstruktur als Teil des erfindungsgemäßen Dachaufsatzes,

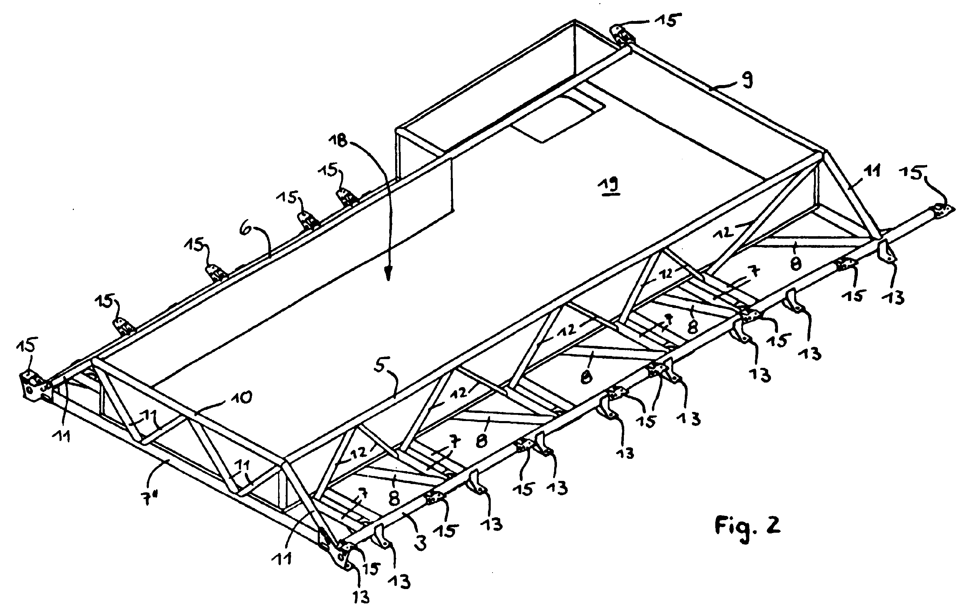

- Fig. 2: die Tragstruktur gemäß Fig. 1 - vom anderen Ende her gesehen - mit eingebauter Innenwanne,
- Fig. 3: den Dachaufsatz gemäß dieser Ausführungsform angebaut auf dem Dach eines gasbetriebenen Omnibusses,
- Fig. 4: den Dachaufsatz gemäß Fig. 3 auf dem Omnibus, ohne äußere Beplankung bzw. Verkleidung dargestellt, zur Verdeutlichung der Abstützung und Befestigung des Dachaufsatzes am Dachgerippe des Omnibusses.

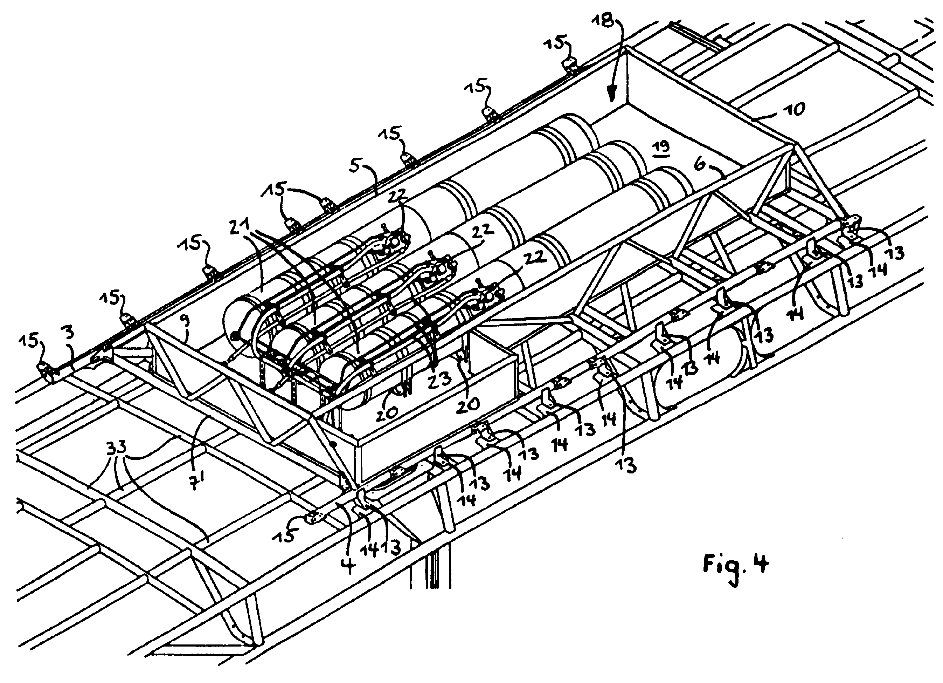

Kernstück des erfindungsgemäßen Dachaufsatzes 1 ist eine räumliche, aus einem Bodengerippe und einem darauf aufgebauten umlaufenden Außenwandgerippe zusammengesetzte Tragstruktur 2 mit einem nach oben offenen bzw. von oben her zugänglichen Innenraum definierter Größe und Form. Das Bodengerippe und das Außenwandgerippe sind in sich jeweils fachwerkartig gestaltet und verstrebt. Die Tragstruktur 2 weist zwei untere gerade Längsholme 3, 4 und zwei obere gerade Längsholme 5, 6 auf. Der Abstand der oberen Längsholme 5, 6 ist geringer als jener der unteren Längsholme 3, 4. Alle vier Längsholme 3, 4, 5, 6 verlaufen parallel zueinander und bilden so die Längskanten einer im Querschnitt etwa trapezförmigen Tragstruktur 2 mit umbautem kubischem Innenraum. Zur Bildung des Bodengerippes der Tragstruktur 2 sind die beiden unteren, in einer Fahrzeugquerebene angeordneten Längsholme 3, 4 miteinander durch eine Vielzahl von Querholmen 7 verbunden, die wiederum durch schräg stehende Streben 8 zu den unteren Längsholmen 3, 4 hin abgestützt sind. Auf diese Weise ist somit innerhalb der Tragstruktur 2 ein stabiles, in sich versteiftes Bodengerippe gegeben. Die beiden oberen, ebenfalls in einer Fahrzeugquerebene angeordneten Längsholme 5, 6 sind jeweils endseitig durch einen oberen Querholm 9, 10 miteinander verbunden, so dass oben in der Tragstruktur 2 eine rechteckige Einbauöffnung für die in deren Innenraum einzubringenden Fahrzeugteile gegeben ist. Jeder der beiden oberen Querholme 9, 10 ist mit dem beabstandet darunter angeordneten, jeweils endseitig äußersten der die beiden unteren Längsholme 3, 4 verbindenden Querholm 7', 7" in einer quer zur Fahrzeuglängsachse stehenden Vertikalebene angeordnet und durch fachwerkartig angeordnete Streben 11 verbunden. Die Querholme 9 bzw. 10 bilden jeweils zusammen mit ihren Streben 11 den stirnseitig vorderen bzw. hinteren Außenwandgerippe-Abschnitt innerhalb der Tragstruktur 2. Die beiden oberen Längsholme 5, 6 der Tragstruktur 2 sind mittels fachwerkartig angeordneter Streben 12 gegenüber den die unteren Längsholme 3, 4 verbindenden Querholmen 7 abgestützt. Die oberen Längsholme 5 bzw. 6 bilden jeweils zusammen mit den in einer Vertikalebene mit ihnen angeordneten Streben 12 den links- bzw. rechtsseitigen Außenwandgerippe-Abschnitt innerhalb der Tragstruktur 2. An den beiden unteren Längsholmen 3, 4 der Tragstruktur 2 ist eine Vielzahl von Stützböcken 13 angebracht, über die der vorgefertigte Dachaufsatz 1 bei seiner Anbringung am Dach 31 des Omnibusses 32 an den dort dachseitig oder am Dachgerippe 33 vorhandenen Gegenlagern 14 - siehe Fig. 4 - zur Abstützung bringbar und befestigbar ist. An den beiden unteren Längsholmen 3, 4 der Tragstruktur 2 ist außerdem eine Vielzahl von Anschlussböcken 15 angeordnet, an denen eine Dachhaube 16 abgestützt befestigbar ist. An den die beiden unteren Längsholme 3, 4 der Tragstruktur 2 verbindenden Querholmen 7 ist eine Vielzahl von Lagerkonsolen 17 angebracht, deren obenendige Auflageflächen alle in einer Horizontalebene liegen, die parallel zu einer durch die unteren Längsholme 3, 4 gehenden Parallelebene liegt. An diesen Schraubenlöcher aufweisenden Lagerkonsolen 17 sind eine in den Innenraum der Tragstruktur 2 evtl. einzubauende Bodenplatte oder eine Innenwanne 18 mit ihrem Boden 19 und/oder Lagerböcke bzw. Traggestelle 20 abgestützt befestigbar, an welch letzteren wiederum in den Innenraum der Tragstruktur 2 einzubauende Fahrzeugteile wie Betriebsmittelbehälter 21 bzw. Gasflaschen mit ihren Anschlussorganen 22 und Leitungen 23 und/oder Steuer-, Regel-, sonstige Geräte lagefixiert befestigbar sind.

Hinsichtlich der Dachhaube 16 gibt es verschiedene Möglichkeiten der Gestaltung. So kann die Dachhaube 16 einstückig und z. B. aus faserverstärkten Kunststoff hergestellt sein. Sofern sich diese Einstückigkeit schwer realisieren lässt, kann die Dachhaube 16 auch aus mehreren vorgefertigten Einzelteilen zusammengesetzt und dann als Ganzes an der Tragstruktur 2 befestigt werden. Diese vorgefertigten Einzelteile können ebenfalls aus faserverstärktem Kunststoff oder als Kunststoffspritzgussteil, aber auch aus anderen Materialien, z. B. lackiertem und mit Korrosionsschutz versehenem Stahlblech oder lackiertem Aluminiumblech und dergleichen hergestellt sein. Alternativ hierzu besteht auch die Möglichkeit, die Dachhaube 16 durch mehrere vorgefertigte Einzelteile wie Paneele bzw. Formteile aus den vorstehend erwähnten Materialien darzustellen, die einzeln oder teilweise schon miteinander verbunden an der Tragstruktur 2 anbringbar sind.

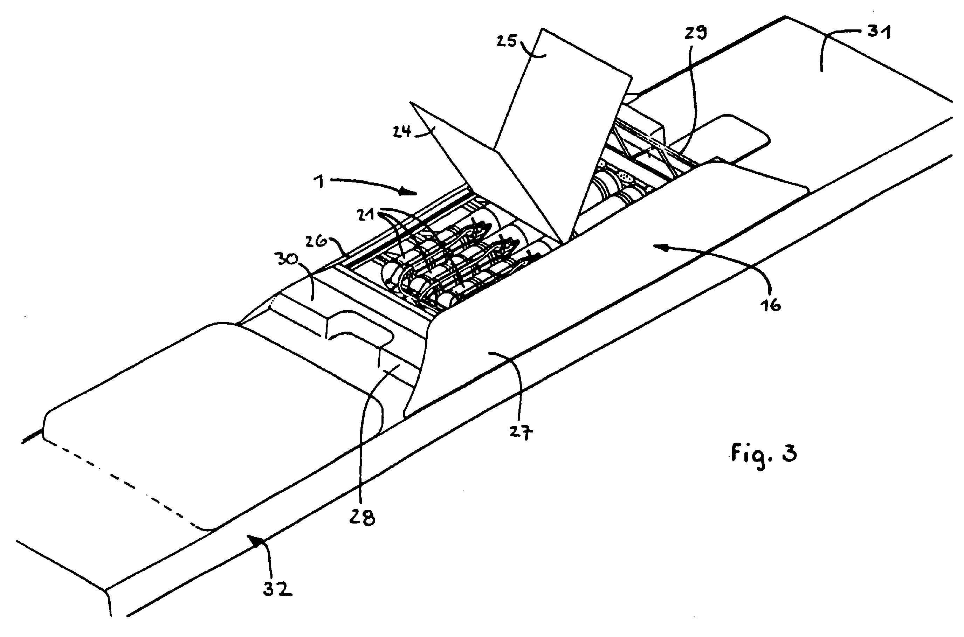

Wie aus Fig. 3 ersichtlich besteht die Möglichkeit, die obenendige Dachfläche der Dachhaube 16 durch zwei großflächige und vorzugsweise im geschlossenen Zustand außen begehbare Klappen 24, 25 zu realisieren, die um eine oder je eine Querachse aus einer Verschlussposition in eine den Zutritt zu den Einbauteilen 21, 22, 23 ermöglichende Öffnungsstellung verschwenkbar sind.

Im dargestellten Beispiel besteht die Dachhaube 16 außer den beiden Klappen 24, 25 aus zwei Seitenwänden 26, 27 und zwei Stirnwänden 28, 29, die durch ein- oder mehrstückige Paneele bzw. Formteile gebildet sind.

Grundsätzlich können einzelne Abschnitte der Dachhaube 16 zur Übernahme von Zusatzfunktionen ausgelegt sein. So ist im dargestellten Beispiel eine der beiden Stirnwände 28 bzw. 29 mit einer begehbaren Trittstufe 30 - siehe Fig. 3 - ausgebildet.

Der erfindungsgemäße Dachaufsatz 1 besteht mithin aus drei Hauptkomponenten, nämlich der Tragstruktur 2, der Dachhaube 16 und den fahrzeugspezifischen Einbauteilen bzw. Geräten. Die Innenwanne 18 dient als nach unten dichte Auffangwanne und als Schutzorgan für den Fall, wenn als Betriebsmittel ein Medium, z. B. Flüssiggas (LPG) verwendet wird, das schwerer als Luft ist. Bei Verwendung von Erdgas (CNG) als Betriebsmittel, das leichter als Luft ist, ist die besagte Innenwanne 18 nicht notwendig. In manchen Fällen kann sich jedoch in der Tragstruktur 2 eine einfache, oben am Bodengerippe aufgesetzte Bodenplatte als zweckmäßig erweisen. Die Tragstruktur 2 stellt sicher, dass die in sie einzubauenden Fahrzeugteile wie Betriebsmittelbehälter 21 und/oder Geräte art- und fahrzeuggerecht gelagert und sicher fixiert sind, außerdem die aufgesetzte Dachhaube 16 sicher gelagert und abgestützt ist.

Die Dachhaube 16 bildet den oberen äußeren Abschluss des Dachaufsatzes 1, unter dem die Tragstruktur 2 samt Einbauteilen bzw. -geräten verschwindet und der auch im Hinblick auf Designkriterien gestaltet ist.

Beim dargestellten Beispiel kommt der erfindungsgemäße Dachaufsatz 1 an einem mit Flüssiggas (LPG) betriebenen Omnibus zur Anwendung, das heißt, in den Innenraum der Tragstruktur 2 ist eine als Auffangorgan für etwaige auftretendes Leckagegas dienende, nach unten dichte Innenwanne 18 eingebaut, in deren Innenraum die Betriebsmittelbehälter 21, hier Flüssiggaskessel, in notwendiger Anzahl mit ihren Anschlusselementen 22 und Leitungen 23, gegebenenfalls auch Steuer- und Regelorganen für den Gasbetrieb, eingebaut sind.

Wenn dagegen das Fahrzeug, an dem der erfindungsgemäße Dachaufsatz 1 vorgesehen ist, z. B. ein mit Erdgas betriebener Omnibus ist, dann sind in den Innenraum der Tragstruktur 2 Erdgaskessel als Betriebsmittelbehälter 21 in notwendiger Anzahl mit ihren Anschlusselementen und Leitungen, gegebenenfalls auch Steuer- und Regelorganen für den Gasbetrieb, eingebaut und an den dort vorgesehenen Organen 20 befestigt.

Falls es sich bei dem Fahrzeug, an dem der erfindungsgemäße Dachaufsatz 1 zur Anwendung kommt, um einen Trolleybus handelt, dann sind in den Innenraum der Tragstruktur 2 z. B. eine Innenwanne oder wenigstens ein kistenartiger Behälter eingebaut, die bzw. der elektrische Steuer-, Regel- oder sonstige Gerätschaften der elektrischen Trolleybusausrüstung aufnimmt.

Die Herstellung des Dachaufsatzes 1 geschieht wie folgt:

Zunächst wird die Tragstruktur 2 aus entsprechend vorgefertigten Einzelteilen komplett vormontiert.

Ebenso wird die Dachhaube 16 vollständig vorgefertigt oder in Teilen, die später an der Tragstruktur 2 befestigbar sind.

Soweit eine Innenwanne 18 notwendig ist, wird diese ebenfalls vorgefertigt und dann in den Innenraum der Tragstruktur 2 eingebaut.

In den Innenraum der Tragstruktur 2 bzw. der schon in die Tragstruktur 2 eingebauten Innenwanne 18 werden dann je nach Fahrzeugtyp die Betriebsmittelbehälter 21 wie Gaskessel mit ihren Anschlüssen 22 und Leitungen 23 und/oder Steuer- und Regelgeräte etc. eingebaut, so dass sie anschließend innerhalb der Tragstruktur 2 lagefixiert befestigt sind. Zuletzt wird auf diese vormontierte Baugruppe die Dachhaube 16 aufgesetzt bzw. deren Teile an der Tragstruktur 2 befestigt.

Dieser solchermaßen isoliert hergestellte, komplett vormontierte Dachaufsatz 1 bildet eine Einheit, die bei der Herstellung des Omnibusses 32 unter Zuhilfenahme eines Krans oder Hebezeuges auf dessen Dach 31 hievbar ist, derart, dass die tragstrukturseitigen Lagerböcke 13 auf den dachseitigen Gegenlagern 14 zur Auflage kommen und dann an diesen festgeschraubt werden.

Nach Anbringung des Dachaufsatzes 1 auf dem Dach 31 des Omnibusses 32 werden die Verbindungen zwischen den Gasflaschen und/oder Steuer-, Regel- oder sonstigen Geräten und den fahrzeugintern vorhandenen Leitungen/Gerätschaften bzw. dem Antriebsaggregat hergestellt.

## Patentansprüche

1. Gas- oder Trolleybus, mit einem auf dem Dach des Busses anzubringenden Dachaufsatz (1), der
als Kernstück eine räumliche Tragstruktur (2) mit einem nach oben offenen, von oben her zugänglichen Innenraum definierter Größe und Form aufweist, in den je Fahrzeugtyp unterschiedliche Fahrzeugteile wie eine Innenwanne (18) und/oder Betriebsmittelbehälter (21), Steuer-, Regel- und/oder sonstige Geräte eingebaut sind, und
als weiteres Teil eine diese räumliche Tragstruktur (2) mit den eingebauten Fahrzeugteilen von oben her abdeckende Dachhaube (16) aufweist,
wobei die räumliche Tragstruktur (2) eine für sowohl Gas- als auch Trolleybus angepasst vorgefertigte Einheit bildet, die auf dem Dach (31) des Busses anzubringen ist, und
aus einem jeweils in sich fachwerkartig gestalteten und verstrebten Bodengerippe und einem oben auf diesem umlaufenden Außenwandgerippe zusammengesetzt ist, wobei
zwei untere gerade Längsholme (3, 4) als Teile des Bodengerippes und zwei obere gerade Längsholme (5, 6) als Teile des Außenwandgerippes aufweist und wobei
- der Abstand der beiden oberen Längsholme (5, 6) zueinander geringer als jener der unteren Längsholme (3, 4) ist, und
- die vier Längsholme (3, 4, 5, 6) parallel zueinander verlaufen und so die Längskanten einer im Querschnitt etwa trapezförmigen Tragstruktur (2) mit umbautem, etwa kubischem Innenraum bilden.

2. Gas- oder Trolleybus nach Anspruch 1, **dadurch gekennzeichnet, dass** zur Bildung des Bodengerippes der Tragstruktur (2) deren beide unteren Längsholme (3, 4) durch eine Vielzahl von Querholmen (7) miteinander verbunden und diese wiederum durch Streben (8) zu den unteren Längsholmen (3, 4) hin abgestützt sind.

3. Gas- oder Trolleybus nach Anspruch 1, **dadurch gekennzeichnet, dass** die beiden oberen Längsholme (5, 6) der Tragstruktur (2) jeweils endseitig durch einen oberen Querholm (9, 10) miteinander verbunden sind, mithin oben in der Tragstruktur (2) eine rechteckige Einbauöffnung für die in deren Innenraum einzubringenden Bauteile verbleibt, und dass zur Bildung des vorderen und hinteren Außenwandgerippe-Abschnitts jeder der beiden oberen Querholme (9, 10) mit einem beabstandet darunter angeordneten, die beiden unteren Längsholme (3, 4) verbindenden unteren Querholm (7', 7") in einer Vertikalebene angeordnet und durch fachwerkartig angeordnete Streben (11) verbunden ist.

4. Gas- oder Trolleybus nach Anspruch 1, **dadurch gekennzeichnet, dass** zur Bildung der links- und rechtsseitigen Außenwandgerippe-Abschnitte der Tragstruktur (2) jeder der beiden oberen Längsholme (5, 6) mittels in einer Vertikalebene mit ihnen liegenden, fachwerkartig angeordneten Streben (12) gegenüber denjenigen Querholmen (7) abgestützt ist, die die beiden unteren Längsholme (3, 4) miteinander verbinden.

5. Gas- oder Trolleybus nach Anspruch 1, **dadurch gekennzeichnet, dass** an den beiden unteren Längsholmen (3, 4) der Tragstruktur (2) eine Vielzahl von Stützböcken (13) angebracht ist, über die der vorgefertigte Dachaufsatz (1) bei seiner Anbringung am Fahrzeug (14) an den dort dachseitig oder dachgerippeseitig vorhandenen Gegenlagern (14) zu Abstützung bringbar und befestigbar ist, und dass an den beiden unteren Längsholmen (3, 4) außerdem eine Vielzahl von Anschlussböcken (15) angeordnet ist, an denen die Dachhaube (16) abgestützt befestigbar ist.

6. Gas- oder Trolleybus nach Anspruch 2, **dadurch gekennzeichnet, dass** an den die beiden unteren Längsholme (3, 4) der Tragstruktur (2) verbindenden Querholmen (7) eine Vielzahl von Lagerkonsolen (17) angebracht ist, deren obenendige Auflageflächen alle in einer Horizontalebene liegen, die parallel zu einer durch die unteren Längsholme (3, 4) gehenden Parallelebene liegt, und dass an den Schraubenlöcher aufweisenden Lagerkonsolen (17) eine in die Tragstruktur (2) einzubauende Bodenplatte oder Innenwanne (18) mit ihrem Boden (19) und/oder Lagerböcke (20) bzw. andere Tragorgane abstützbar und befestigbar sind, an denen wiederum die in die Tragstruktur (2) einzubauenden Fahrzeugteile (21) lagefixiert befestigbar sind.

7. Gas- oder Trolleybus nach Anspruch 1, **dadurch gekennzeichnet, dass** bei einem auf dem Dach (31) eines mit Flüssiggas (LPG) betriebenen Omnibusses anzubringenden Dachaufsatz (1) in den Innenraum von dessen Tragstruktur (2) eine als Auffangorgan dienende dichte Innenwanne (18) eingebaut ist, in deren Innenraum wiederum Flüssiggaskessel (21) in notwendiger Anzahl mit ihren Anschlusselementen (22), Leitungen (23), Steuer- und Regelorganen eingebaut sind.

8. Gas- oder Trolleybus nach Anspruch 1, **dadurch gekennzeichnet, dass** bei einem auf dem Dach (31) eines mit Erdgas (CNG) betriebenen Omnibusses anzubringenden Dachaufsatz (1) im Innenraum von dessen Tragstruktur Erdgaskessel (21) in notwendiger Anzahl mit ihren Anschlusselementen (22), Leitungen (23), Steuer- und Regelorganen angeordnet und an dort vorgesehenen Organen (20) befestigt sind.

9. Gas- oder Trolleybus nach Anspruch 1, **dadurch gekennzeichnet, dass** bei einem auf dem Dach (31) eines Trolleybusses anzubringenden Dachaufsatz (1) in den Innenraum von dessen Tragstruktur (2) eine Innenwanne oder wenigstens ein kistenartiger Behälter eingebaut ist, in der bzw. dem Steuer-, Regel- oder sonstige Gerätschaften der elektrischen Trolleybusausrüstung untergebracht sind.

## Claims

1. Gas or trolley bus with a roof attachment (1) to be fitted to the roof of the bus, which roof attachment (1)
• features as core element a spatial carrying structure (2) with an interior which is of defined size and shape and is open towards and accessible from the top, in which interior, depending on the vehicle model, different vehicle parts such as an inner pan (18) and/or service-product tanks (21), control, regulating and/or other devices are installed, and
• features, as a further part, a roof cover (16) covering this spatial carrying structure (2) with the installed vehicle parts from above,
whereby the spatial carrying structure (2) constitutes a prefabricated unit which is adapted to both gas and trolley buses and is to be attached to the roof (31) of the bus, and
• is composed of a bottom skeleton designed as a framework provided with struts and of a continuous outer wall skeleton mounted on top of said bottom skeleton, whereby
• said spatial carrying structure (2) is provided with two lower straight longitudinal spars (3, 4) as parts of the bottom skeleton and two upper straight longitudinal spars (5, 6) as parts of the outer wall skeleton, whereby
o the distance between the two upper longitudinal spars (5, 6) is smaller than that between the lower longitudinal spars (3, 4) and
o the four longitudinal spars (3, 4, 5, 6) run parallel to one another and, consequently, form the longitudinal edges of a carrying structure (2) of approximately trapezoidal cross-section with a walled-in, approximately cubic interior.

2. Gas or trolley bus according to Claim 1, **characterised in that** for the formation of the bottom skeleton of the carrying structure (2) its two lower longitudinal spars (3, 4) are interconnected by a multitude of transverse spars (7) which in turn are supported on the lower longitudinal spars (3, 4) by means of struts (8).

3. Gas or trolley bus according to Claim 1, **characterised in that** the ends of the two upper longitudinal spars (5, 6) of the carrying structure (2) are connected with each other by an upper transverse spar (9, 10), so that in the top end of the carrying structure (2) is formed a rectangular installation orifice for the components to be installed in the interior and that for the formation of the front and rear outer wall skeleton sections of each of the two upper transverse spars (9, 10) is, in a perpendicular plane, connected, by means of struts (11) arranged in a lattice-type manner, with a lower transverse spar (7', 7") placed under each of said upper transverse spars (9, 10) at a distance and connecting the two lower longitudinal spars (3, 4).

4. Gas or trolley bus according to Claim 1, **characterised in that** for the formation of the left- and right-hand outer wall skeleton sections of the carrying structure (2) each of the two upper longitudinal spars (5, 6) is braced by means of struts (12) located in one perpendicular plane with said upper longitudinal spars (5, 6) and arranged in a lattice-type manner against those transverse spars (7) which connect the two lower longitudinal spars (3, 4) with each other.

5. Gas or trolley bus according to Claim 1, **characterised in that** a multitude of support blocks (13) is fitted to the two lower longitudinal spars (3, 4) of the carrying structure (2) via which the prefabricated roof attachment (1) can, for its mounting on the vehicle (14), be supported on and fastened to the countersupports (14) present on the roof or roof skeleton and that, in addition, a multitude of connecting blocks (15) is arranged on the two lower longitudinal spars (3, 4), whereby the roof cover (16) can be supported on and fastened to said connecting blocks (15).

6. Gas or trolley bus according to Claim 2, **characterised in that** a multitude of bearing consoles (17) is provided on the transverse spars (7) connecting the two lower longitudinal spars (3, 4) of the carrying structure (2), the contact faces on the upper ends of which bearing consoles (17) are all arranged in one horizontal plane which is parallel to a parallel plane passing through the lower longitudinal spars (3, 4) and that a bottom plate or inner pan (18) to be installed in the carrying structure (2) can be supported on and fastened to the bearing consoles (17) provided with screw holes, said bottom plate or inner pan (18) being supported and fastened by its bottom (19) and/or bearing blocks (20) and other carrying organs to which in turn the vehicle parts (21) to be installed in the carrying structure (2) are attached in a fixed position.

7. Gas or trolley bus according to Claim 1, **characterised in that** a tight inner pan (18) serving as a collector organ is installed in the interior of the carrying structure (2) of a roof attachment (1) to be fitted to the roof (31) of a bus powered by liquified petroleum gas (LPG), in the interior of which inner pan (18) the necessary number of liquified-gas tanks (21) with their connection elements (22), pipes (23) and control and regulating organs is installed.

8. Gas or trolley bus according to Claim 1, **characterised in that** the necessary number of natural-gas tanks (21) with their connection elements (22), pipes (23) and control and regulating organs is arranged in the interior of the carrying structure (2) of a roof attachment (1) to be fitted to the roof (31) of a bus powered by natural gas (CNG) and is fastened to the organs (20) there provided.

9. Gas or trolley bus according to Claim 1, **characterised in that** an inner pan or at least a box-type container is installed in the interior of the carrying structure (2) of a roof attachment (1) to be fitted to the roof (31) of a trolley bus, in the interior of which inner pan / box-type container control and regulating organs or other devices of the electrical equipment of the trolley bus are accommodated.

## Revendications

1. Autobus au gaz ou trolleybus, avec un élément de pavillon (1) installé sur le pavillon de l'autobus, qui
- Présente, comme pièce maîtresse, une structure porteuse tridimensionnelle (2) avec un espace intérieur ouvert sur le dessus, accessible par le dessus et de taille et de forme définie, dans lequel différentes pièces de véhicule telles qu'une coque intérieure (18) et/ou des réservoirs d'ingrédient (21), des appareils de commande, de régulation et/ou d'autres appareils sont montés en fonction du type de véhicule,
- présente, comme autre pièce, un capot de pavillon (16) recouvrant sur le dessus cette structure porteuse tridimensionnelle (2) avec les pièces montées du véhicule,
auquel cas la structure porteuse tridimensionnelle (2) forme une unité préfabriquée de manière adaptée aussi bien pour les autobus au gaz que les trolleybus et qui doit être installée sur le pavillon (31) de l'autobus, et cette structure porteuse se compose d'une ossature de plancher conçue en treillis et entretoisée et d'une ossature de paroi extérieure entourant celle-ci, auquel cas
cette structure porteuse présente deux longerons droits inférieurs (3, 4) comme pièces de l'ossature de plancher et deux longerons droits supérieurs (5, 6) comme pièces de l'ossature de paroi extérieure, auquel cas
- l'écart des deux longerons supérieurs (5, 6) l'un par rapport à l'autre est plus petit que celui des longerons inférieurs (3, 4), et
- les quatre longerons (3, 4, 5, 6) sont situés parallèlement les uns par rapport aux autres et forment ainsi les arêtes longitudinales d'une structure porteuse (2) en section de forme quasiment trapézoïdale avec un espace intérieur transformé, de forme quasiment cubique.

2. Autobus au gaz ou trolleybus selon la revendication 1, **caractérisé en ce que**, pour former l'ossature de plancher de la structure porteuse (2), ses deux longerons inférieurs (3, 4) sont reliés entre eux par une multitude de traverses (7) et **en ce que** celles-ci sont à leur tour supportées par des montants (8) par rapport aux longerons inférieurs (3, 4).

3. Autobus au gaz ou trolleybus selon la revendication 1, **caractérisé en ce que**, les deux longerons supérieurs (5, 6) de la structure porteuse (2) sont reliés chacun l'un à l'autre à chaque extrémité à une traverse supérieure (9, 10), assurant au dessus une ouverture de montage rectangulaire dans la structure porteuse (2) pour loger les composants à monter dans l'espace intérieur, et **en ce que**, pour former la section avant et arrière de l'ossature de paroi extérieure, chacune des deux traverses supérieures (9, 10) est reliée, de manière disposée dans un plan vertical, à une traverse inférieure (7', 7") disposée en dessous à une certaine distance et reliant les deux longerons inférieurs (3, 4) par des montants (11) disposés en treillis.

4. Autobus au gaz ou trolleybus selon la revendication 1, **caractérisé en ce que**, pour former les sections côté gauche et droit de l'ossature de la paroi extérieure de la structure porteuse (2), chacun des deux longerons supérieurs (5, 6) est en appui au moyen de montants (12) à plat dans un plan vertical avec eux et disposés en treillis vis-à-vis de leurs traverses (7) qui relient les deux longerons inférieurs (3, 4) l'un à l'autre.

5. Autobus au gaz ou trolleybus selon la revendication 1, **caractérisé en ce qu'**au niveau des deux longerons inférieurs (3, 4) de la structure porteuse (2) est montée une multitude de supports d'appui (13) par le biais desquels l'élément de pavillon (1) préfabriqué peut être mis en appui et fixé lors de son montage sur le véhicule (32) au niveau des contre-paliers (14) existants côté pavillon ou côté ossature de pavillon, et **en ce qu'**au niveau des deux longerons inférieurs (3, 4) est également disposée une multitude de supports d'appui (15) sur lesquels peut être fixé en appui le capot de pavillon (16).

6. Autobus au gaz ou trolleybus selon la revendication 2, **caractérisé en ce qu'**au niveau des traverses (7) reliant les deux longerons inférieurs (3, 4) de la structure porteuse (2) est montée une multitude de consoles de palier (17) dont les surfaces d'appui à l'extrémité supérieure se trouvent dans un plan horizontal, lequel se trouve parallèle à un plan vertical passant à travers les longerons inférieurs (3, 4), et **en ce qu'**au niveau des consoles de palier (17) présentant des trous pour vis peuvent être mis en appui et fixés une plaque de plancher ou une coque intérieure (18) avec son fond (19) à monter dans la structure porteuse (2) et/ou des supports de palier (20) ou d'autres organes porteurs sur lesquels peuvent à leur tour être fixés de manière fixe les pièces de véhicule (21) à monter dans la structure porteuse (2).

7. Autobus au gaz ou trolleybus selon la revendication 1, **caractérisé en ce que**, dans le cas d'un élément de pavillon (1) à monter sur le pavillon (31) d'un autobus exploité avec du gaz liquéfié (GPL), une coque intérieure (18) étanche servant d'organe de rétention est montée dans l'espace intérieur de sa structure porteuse (2) et cette coque reçoit à son tour des réservoirs à gaz liquéfié (21) en nombre suffisant avec leurs éléments de raccordement (22), leurs conduites (23), leurs organes de commande et leurs organes de régulation.

8. Autobus au gaz ou trolleybus selon la revendication 1, **caractérisé en ce que**, dans le cas d'un élément de pavillon (1) à monter sur le pavillon (31) d'un autobus exploité avec du gaz naturel (GNC), des réservoirs à gaz naturel (21) en nombre suffisant avec leurs éléments de raccordement (22), leurs conduites (23), leurs organes de commande et leurs organes de régulation sont disposés dans l'espace intérieur de sa structure porteuse et sont fixés aux organes prévus à cet endroit.

9. Autobus au gaz ou trolleybus selon la revendication 1, **caractérisé en ce que**, dans le cas d'un élément de pavillon (1) à monter sur le pavillon (31) d'un trolleybus, une coque intérieure ou au minimum un bac en forme de caisse est monté(e) dans l'espace intérieur de sa structure porteuse (2) et cette coque ou ce bac reçoit les organes de commande, les organes de régulation ou les autres appareils de l'équipement électrique du trolleybus.
